# EUROPEAN PATENT APPLICATION

(11) **EP 2 688 345 A1**
(43) Date of publication of application: **22.01.2014**
(21) Application number: 12763161.2
(22) Date of filing: 31.03.2012
(51) Int. Cl.: H04W 52/02

(54) **IMPLEMENTATION METHOD AND TERMINAL OF VOICE BUSINESS**

(30) Priority: 31.03.2011 CN 201110081182
(71) Applicant: Huawei Technologies Co., Ltd., Shenzhen, Guangdong 518129 (CN)
(72) Inventor: LIU, Hai, Shenzhen Guangdong 518129 (CN); WU, Xiaobo, Shenzhen Guangdong 518129 (CN); JIN, Weisheng, Shenzhen Guangdong 518129 (CN)
(74) Representative: Epping - Hermann - Fischer
(86) International application number: PCT/CN2012/073433
(87) International publication number: WO 2012/130177

(57) **Abstract**

The embodiments of the present invention disclose a method for implementing a voice service and a terminal, which relate to the field of communications technologies and are used to reduce power consumption of a terminal to reach a purpose of saving energy. A method for implementing a voice service in the embodiments of the present invention includes: a terminal attaches to a 2G/3G network and the 4G network through an MME on a 4G network; when a voice service does not need to be implemented, the CS transceiver of the terminal is in off state or static state; when a voice service needs to be implemented, for the terminal whose CS transceiver stays in off state, a CS fallback process needs to be triggered and turn on the CS transceiver to complete a voice service, for the terminal whose CS transceiver stays in static state, directly implementing a voice service through the 2G/3G network. The solution in embodiments of the present invention applies to a dual radio dual-mode terminal.

## Description

This application claims priority to Chinese Patent Application No. 201110081182.6, filed with the Chinese Patent Office on March 31, 2011 and entitled "METHOD AND TERMINAL FOR IMPLEMENTING A VOICE SERVICE", which is incorporated herein by reference in its entirety.

### TECHNICAL FIELD

The present invention relates to the field of communications technologies, and in particular, to a method and a terminal for implementing a voice service.

### BACKGROUND

An existing communications network includes a CS (Circuit Switched, circuit switched) domain network and a PS (Packet Switched, packet switched) domain network. For example, a PS domain on an LTE network is applicable to transmit a high-speed data service, and a CS domain in a GSM or UMTS network is applicable to perform a voice call.

To meet a requirement that PS transmits data and CS transmits voice, in the prior art, for a dual-receiving and dual-sending (dual radio) UE, a CS radio module and a PS radio module of the UE may be turned on at the same time, and the UE uses a PS module to perform a data service and uses a CS module to perform a voice service at the same time.

During a process of implementing the foregoing voice service, the inventor finds that the prior art has at least the following problem.

A transceiver on a CS domain network and a transceiver corresponding to a PS domain network need to be turned on at the same time and both keep in working state without implementing optimization. This may cause very large power consumption of a terminal UE.

### SUMMARY

Embodiments of the present invention provide a method and a terminal for implementing a voice service to reduce power consumption of a terminal in order to reach a purpose of saving energy.

To achieve the foregoing purpose, the embodiments of the present invention adopt the following technical solutions.

In one aspect, an embodiment of the present invention provides a method for implementing a voice service, where the method includes:
residing, by a terminal, in a cell on a 4G network;
sending, by a terminal, a combined attachment message or a combined location update message to a mobility management entity MME on a 4G network to attach to a 2G/3G network and the 4G network, where a CS transceiver of the terminal is in off state;
sending, by the terminal, an extended service request message to the MME when a voice service needs to be implemented, so that the MME instructs that a base station on the 4G network needs to trigger a CS fallback;
receiving, by the terminal, a notification on measuring the 2G/3G network sent by the base station on the 4G network;
turning on, by the terminal, the CS transceiver, and measuring the 2G/3G network according to the notification; and
implementing, by the terminal, the voice service on the 2G/3G network according to a measurement result.

A terminal is provided. The terminal is a dual-mode terminal and includes:
a residing unit, configured to make the terminal reside in a cell on a 4G network;
an attaching unit, configured to send a combined attachment message or a combined location update message to a mobility management entity MME on the 4G network to, so that the terminal performs combined attachment to a 2G/3G network and the 4G network, where a CS transceiver of the terminal is in off state;
a first sending unit, configured to send an extended service request message to the MME when a voice service needs to be implemented, so that the MME instructs that a base station on the 4G network needs to trigger a CS fallback;
a receiving unit, configured to receive a notification on measuring the 2G/3G network sent by the base station on the 4G network;
a starting unit, configured to turn on the CS transceiver and measure the 2G/3G network according to the notification; and
a voice unit, configured to implement the voice service on the 2G/3G network according to a measurement result.

In another aspect, an embodiment of the present invention further provides a method for implementing a voice service, including:
residing, a terminal, in a cell on a 2G/3G network and a cell on a 4G network at the same time;
sending, by the terminal, a combined attachment message or a combined location update message to a mobility management entity MME on the 4G network to complete combined attachment of the terminal to the 2G/3G network and the 4G network;
keeping residing, by the terminal, in the cell on the 2G/3G network when a voice service does not need to be implemented; and
implementing, by the terminal, the voice service through the 2G/3G network when the voice service needs to be implemented.

A terminal is provided. The terminal is a dual-mode terminal and includes:
a residing unit, configured to make the terminal reside in a cell on a 2G/3G network and in a cell on a 4G network at the same time;
an attaching unit, configured to send a combined attachment message or a combined location update message to a mobility management entity MME on the 4G network to complete combined attachment of the terminal to the 2G/3G network and the 4G network;
the residing unit, further configured to retain a residing state of the terminal in the cell on the 2G/3G network when a voice service does not need to be implemented; and
a voice unit, configured to implement the voice service through the 2G/3G network when the voice service needs to be implemented.

According to the method and the terminal for implementing the voice service provided in the embodiments of the present invention, when a voice service does not need to be implemented, the PS transceiver in a dual-mode terminal keeps in working state and the CS transceiver in the dual-mode terminal is turned off or is made in static state. This may reduce power consumption of the terminal when there is no voice service. Furthermore, the terminal has performed combined attachment to the 2G/3G network; therefore, when a voice service needs to be implemented, the terminal is capable of completing service handover rapidly. With the solutions provided in the embodiments of the present invention, the power consumption of the terminal may be reduced to reach the purpose of saving energy; in addition, a process in which the 2G/3G network is accessed to implement a voice service may be fastened.

### BRIEF DESCRIPTION OF DRAWINGS

To illustrate technical solutions in embodiments of the present invention or in the prior art more clearly, the following briefly introduces the accompanying drawings required for describing the embodiments or the prior art. Apparently, the accompanying drawings in the following description show merely some embodiments of the present invention, and persons with ordinary skills in the art may still derive other drawings from these accompanying drawings without creative efforts.
FIG. 1 is a flowchart of a method for implementing a voice service according to Embodiment 1 of the present invention;
FIG. 2 is a structural schematic diagram of a terminal according to Embodiment 1 of the present invention;
FIG. 3 is a signaling flowchart of a method for implementing a voice service according to Embodiment 2 of the present invention;
FIG. 4 is a signaling flowchart of a method for implementing a voice service according to Embodiment 3 of the present invention;
FIG. 5 is a signaling flowchart of a method for implementing a voice service according to Embodiment 4 of the present invention;
FIG. 6 is a structural schematic diagram of a terminal according to Embodiment 5 of the present invention;
FIG. 7 is implementation mode 1 of a voice unit in the terminal in FIG. 6;
FIG. 8 is implementation mode 2 of the voice unit in the terminal in FIG. 6;
FIG. 9 is implementation mode 3 of the voice unit in the terminal in FIG. 6;
FIG. 10 is a flowchart of a method for implementing a voice service according to Embodiment 6 of the present invention;
FIG. 11 is a structural schematic diagram of a terminal according to Embodiment 6 of the present invention;
FIG. 12 is a flowchart of a method for implementing a voice service according to Embodiment 7 of the present invention;
FIG. 13 is a signaling flowchart of a UE's attachment to a 2G/3G network according to Embodiment 7 of the present invention;
FIG. 14 is a signaling flowchart of the UE's 2G/3G network reselection according to Embodiment 7 of the present invention; and
FIG. 15 is a structural schematic diagram of a terminal according to Embodiment 7 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skills in the art based on the embodiments of the present invention without creative efforts shall fall within the protection scope of the present invention.

The following describes in detail a method and a terminal for implementing a voice service provided in the embodiments of the present invention with reference to the accompanying drawings.

### Embodiment 1

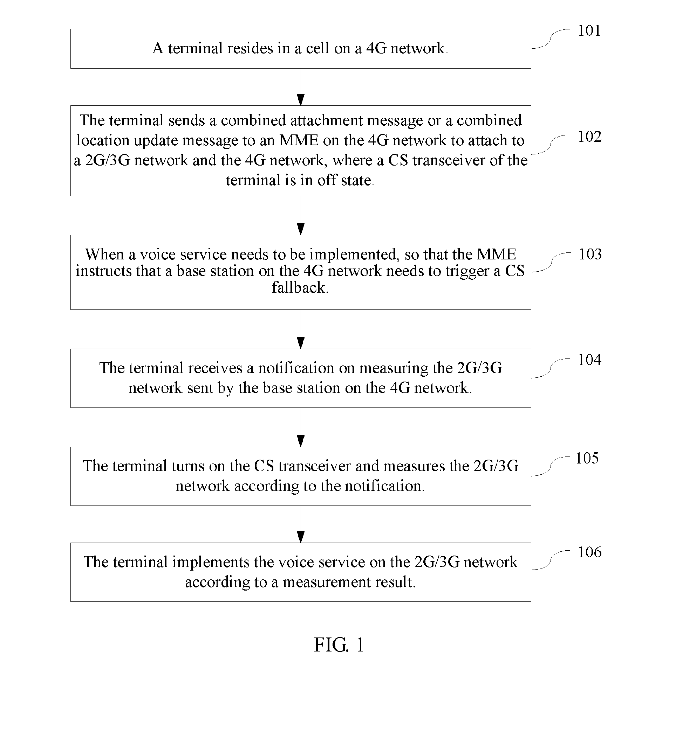

As shown in FIG. 1, a method for implementing a voice service provided in an embodiment of the present invention includes the following steps:
101: A terminal resides in a cell on a 4G network.
102: The terminal sends a combined attachment message or a combined location update message to an MME (Mobility management entity, mobility management entity) on the 4G network to attach to a 2G/3G network and the 4G network, where a CS transceiver of the terminal (for example, a 2G/3G receiver) is in off state.

The combined attachment of the terminal or combined location update to the 2G/3G network and the 4G network specifically refers to the combined attachment of the terminal or combined location update to a 2G/3G circuit switched CS network and a 4G network.
103: When a voice service needs to be implemented, the terminal sends an extended service request message (extended service request) to the MME, so that the MME instructs that a base station on the 4G network needs to trigger a CS fallback (CS fallback).
104: The terminal receives a notification on measuring the 2G/3G network sent by the base station on the 4G network.
105: The terminal turns on the CS transceiver and measures the 2G/3G network according to the notification.
106: The terminal implements the voice service on the 2G/3G network according to a measurement result.

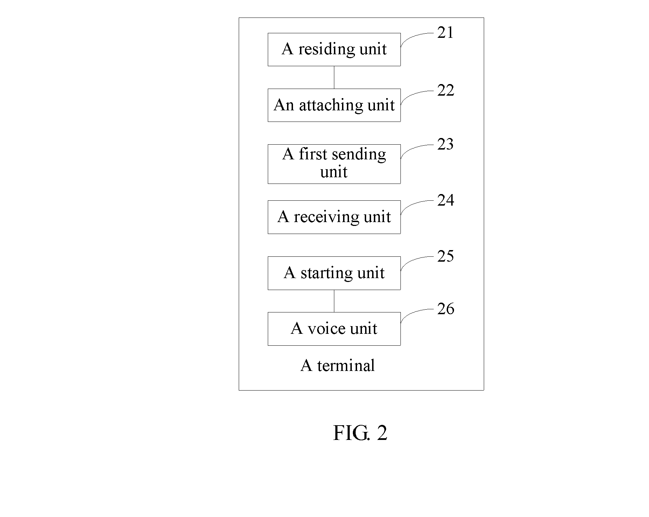

Corresponding to the foregoing method, this embodiment provides a terminal for implementing a voice service; where the terminal is a dual-mode terminal. As shown in FIG. 2, the terminal includes:
a residing unit 21, configured to make the terminal reside in a cell on a 4G network;
an attaching unit 22, configured to send a combined attachment message or a combined location update message to a mobility management entity MME on the 4G network, so that the terminal performs combined attachment to a 2G/3G network and the 4G network, where a CS transceiver of the terminal is in off state;
a first sending unit 23, configured to send an extended service request message to the MME when a voice service needs to be implemented, so that the MME instructs that a base station on the 4G network needs to trigger a CS fallback;
a receiving unit 24, configured to receive a notification on measuring the 2G/3G network sent by the base station on the 4G network;
a starting unit 25, configured to turn on the CS transceiver and measure the 2G/3G network according to the notification; and
a voice unit 26, configured to implement the voice service on the 2G/3G network according to a measurement result.

According to the method and the terminal for implementing the voice service provided in this embodiment of the present invention, when a voice service does not need to be implemented, the PS transceiver in a dual-mode terminal keeps in working state and the CS transceiver in the dual-mode terminal is turned off. This may reduce power consumption of the terminal when there is no voice service. Furthermore, the terminal has performed combined attachment to the 2G/3G network; therefore, when a voice service needs to be implemented, the terminal is capable of completing service handover rapidly. With the solutions provided in the embodiments of the present invention, the power consumption of the terminal may be reduced to reach the purpose of saving energy; in addition, a process in which the 2G/3G network is accessed to implement a voice service may be fastened.

In the embodiment of the present invention, the 2G network may be a GSM (Global System for Mobile Communications, global system for mobile communications) network. The 3G network may be a WCDMA (Wideband Code Division Multiple Access, wideband code division multiple access) network. The 4G network may be an LTE (Long Term Evolution, long term evolution) network or an LTE-A (Long Term Evolution Advance, long term evolution advanced) network.

### Embodiment 2

A terminal involved in an embodiment of the present invention is a dual radio (dual radio) terminal, that is, a CS transceiver and a PS transceiver are deployed in the terminal at the same time.

In this embodiment, an LTE network is taken as an example of a 4G network. The PS transceiver in the terminal (in this embodiment, it may be a 4G transceiver, such as an LTE transceiver) remains in on state and stays in working state, but the CS transceiver (in this embodiment, it may be a 2G/3G transceiver) stays in off state.

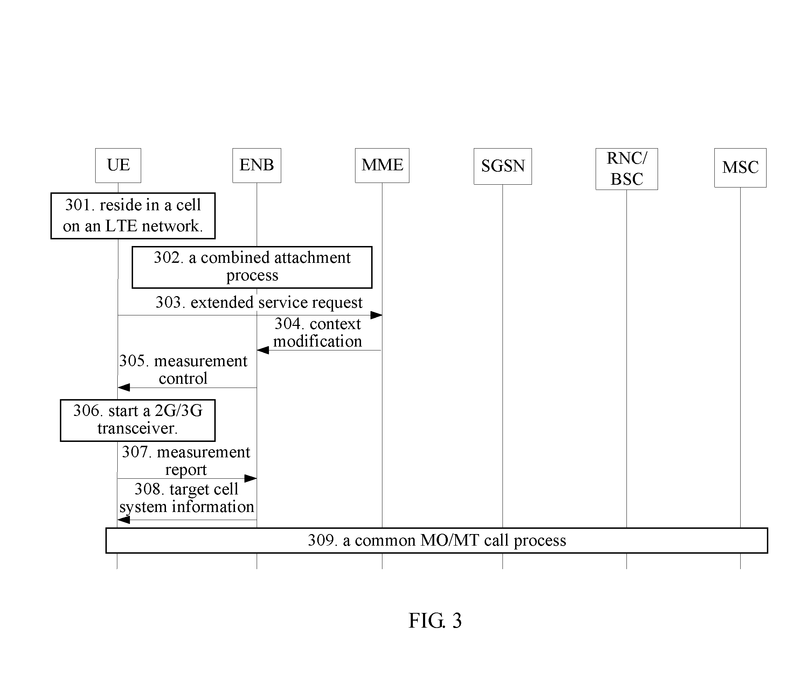

As shown in FIG. 3, a method for implementing a voice service provided in the embodiment of the present invention specifically includes the following steps:
301: A terminal UE resides in a cell on an LTE network.
302: By sending a combined attachment message to an MME on the LTE network, the terminal UE performs combined attachment to the LTE network and a 2G/3G network, where a 2G/3G transceiver of the terminal UE stays in off state.
303: When a voice service needs to be implemented, the UE sends an extended service request message (extended service request) to the MME on the LTE network, so that the MME instructs that a base station on the LTE network needs to trigger a CSFB (Circuit Switch FallBack, CS fallback) process.
304: The MME sends a context modification (context modification) message to an ENB (Evolved NodeB, Evolved NodeB), which is used to instruct the ENB to perform a CS fallback. The context modification message may also carry indication information indicating that the existing CSFB process is a CSFB process based on a dual radio mode.

Before implementing step 305, the MME needs to acquire whether the UE has dual radio capability first. Specifically, the UE may send radio capability (radio capability information) to the ENB, and add dual radio capability indication information in the radio capability. Therefore, after obtaining the radio capability, the ENB acquires whether the UE has the dual radio capability; or
the UE notifies the MME whether the UE itself has dual radio capability, for example, the UE sends network capability (network capability information) to the MME, and adds dual radio capability indication information in the network capability. After acquiring dual radio capability of the UE, the MME notifies the ENB.
305: The ENB sends a measurement control (measurement control) message to the UE, which is used to instruct the UE to measure a cell on the 2G/3G network (hereinafter referred to as a 2G/3G cell). The measurement control message contains 2G/3G cell information or frequency group information. The 2G/3G cell information is used to indicate one or multiple 2G/3G cells that the terminal needs to measure. The frequency group information is used to indicate a 2G/3G cell that performs communications on one or multiple frequencies and that the terminal needs to measure. Meanwhile, the measurement control message may not carry a measurement gap (measurement gap), which is used to instruct the UE to turn on the 2G/3G transceiver to measure the 2G/3G cell.
306: After receiving the measurement control message, the UE starts the 2G/3G transceiver, and measures the 2G/3G network according to the measurement control message.

After the 2G/3G transceiver is turned on, the UE first resides to the currently attached 2G/3G cell according to a measurement result, and then implements a CS voice service in the 2G/3G cell. For detailed implementing process, reference may be made to step 307-step 309.
307: The UE sends a measurement report to a base station ENB on the LTE network, where the measurement report carries the measurement result obtained after the UE performs measurement on the 2G/3G network.
308: The ENB selects a target cell according to the measurement result, and sends system information of the target cell (target cell system information) to the UE.
309: The UE resides to the target cell on the 2G/3G network according to the system information, and implements a common MO (Mobile Originating call) or MT (Mobile Terminating call) call process.

Residing to the target cell on the 2G/3G network refers to that the terminal reads the system information of the target cell, and initiates cell selection and cell reselection functions.

During the implementation of the foregoing steps, if a location area where the UE locates is different from a location area where the UE has registered before, the UE also needs to send a combined location update message to the MME on the 4G network (LTE network) to perform location area update, so that the UE performs combined attachment to the 2G/3G network where it currently locates and the 4G network before implementing the voice service.

By using the method for implementing the voice service provided in the embodiment of the present invention, when a voice service does not need to be implemented, only the PS transceiver in the terminal needs to be turned on, but the CS transceiver stays in off state, and power consumption of the CS transceiver is reduced; therefore, entire power consumption of the terminal is greatly reduced. When a voice service needs to be implemented, after receiving a turning-on instruction, namely the measurement control message sent by the ENB, the UE turns on the CS transceiver in the terminal to ensure correct processing of the voice service. Using the solution in the embodiment of the present invention, the power consumption of the terminal may be reduced to reach the purpose of saving energy while keeping high-speed data service experiences when a user uses a voice service.

### Embodiment 3

A terminal involved in an embodiment of the present invention is a dual-receiving and dual-sending (dual radio) terminal, that is, a CS transceiver and a PS transceiver are deployed in the terminal at the same time, and the transceivers are capable of working at the same time.

In this embodiment, an LTE network is taken as an example of a 4G network. The PS transceiver in the terminal (in this embodiment, it may be a 4G transceiver, such as an LTE transceiver) remains in on state and stays in working state, but the CS transceiver (in this embodiment, it may be a 2G/3G transceiver) stays in off state.

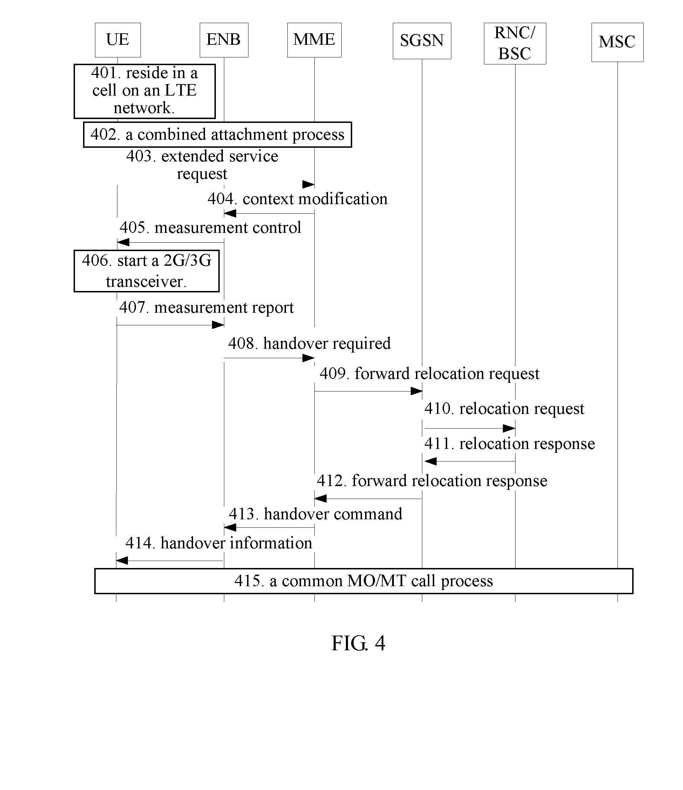

As shown in FIG. 4, a method for implementing a voice service provided in the embodiment of the present invention specifically includes the following steps:
401: A terminal UE resides in a cell on an LTE network.
402: By sending a combined attachment message to an MME on the LTE network, the terminal UE performs combined attachment to the LTE network and a 2G/3G network, where a 2G/3G transceiver of the terminal UE stays in off state.
403: When a voice service needs to be implemented, (the UE acts as a calling party or the UE receives a paging message and acts as a called party), the UE sends an extended service request message (extended service request) to the MME on the LTE network, so that the MME instructs that a base station on the LTE network needs to trigger a CS fallback process.
404: The MME sends a context modification (context modification) message to an ENB, which is used to instruct the ENB to implement a CS fallback. The context modification message may also carry indication information indicating that the existing CS fallback process is a CSFB process based on a dual radio mode.

Before implementing step 405, the MME needs to acquire whether the UE has dual radio capability first. Specifically, the UE may send radio capability (radio capability information) to the ENB, and add indication information of dual radio capability in the radio capability. Therefore, after obtaining the radio capability, the ENB acquires whether the UE has the dual radio capability; or
the UE notifies the MME whether the UE itself has dual radio capability, for example, the UE sends network capability (network capability information) to the MME, and adds dual-receiving and dual-sending capability indication information in the network capability. After acquiring dual radio capability of the UE, the MME notifies the ENB of the dual radio capability.
405: The ENB sends a measurement control (measurement control) message to the UE, which is used to instruct the UE to measure a cell on the 2G/3G network (hereinafter referred to as a 2G/3G cell). The measurement control message contains 2G/3G cell information or frequency group information. The 2G/3G cell information is used to indicate one or multiple 2G/3G cells that the terminal needs to measure. The frequency group information is used to indicate a 2G/3G cell that performs communications on one or multiple frequencies and that the terminal needs to measure. Meanwhile, the measurement control message may not carry a measurement gap (measurement gap), which is used to instruct the UE to turn on the 2G/3G transceiver to measure the 2G/3G cell.
406: After receiving the measurement control message, the UE starts the 2G/3G transceiver, and measures the 2G/3G network according to the measurement control message.

Through the foregoing steps 403-406, a start process of the CS transceiver, namely, the 2G/3G transceiver, may be complete. After the 2G/3G transceiver is turned on, for the specific implementation process that the UE implements a CS voice service in a 2G/3G cell according to the measurement result after the 2G/3G transceiver is turned on, reference may be made to step 407-step 415.
407: The UE sends a measurement report to a base station ENB on the LTE network, where the measurement report carries the measurement result obtained after the UE performs measurement on the 2G/3G network. The ENB selects a target cell according to the measurement result in the measurement report.

After that, the ENB triggers a PS handover process. For details, reference may be made to description in the following steps:
408: The ENB sends a handover required (handover required) message to the MME on the LTE network. The handover required message may contain an indication indicating whether to perform a dual radio handover.
409: The MME sends a handover message - a forward repositioning request (forward relocation request) to a serving GPRS support node SGSN (Serving GPRS Support Node) on the 2G/3G network.

If the handover required message sent by the ENB contains a dual radio indication, the forward repositioning request sent by the MME to the GPRS also contains a dual radio indication, and the MME does not release a bearer context.

Beside carrying a dual radio indication through the forward repositioning request, in this embodiment, a new message may also be defined to instruct a dual radio handover.
410: The SGSN sends a handover request message - a relocation request (relocation request) to a BSC (Base Station Controller, base station controller)/RNC (Radio Network Controller, radio network controller). The message does not carry RAB (Radio Access Bear, radio access bearer) information; in this way, the BSC/RNC only prepares resources for an RRC connection.
411: The BSC/RNC returns a handover answer message - a relocation response (relocation response) to the SGSN.
412: The SGSN returns a forward repositioning response (forward relocation response) to the MME.
413: The MME sends a handover response message - a handover command (handover command) to the ENB.
414: The ENB sends a handover response message - handover information (handover information) to the UE.

In step 414, the ENB uses a new RRC (Radio Resource Control, radio resource control protocol) message to send a handover message, without affecting an LTE communications connection between the ENB and UE.
415: The UE establishes a new RCC connection on the 2G/3G network, and then uses the 2G/3G transceiver in the UE to complete a common MO or MT process through the newly established RRC connection.

In step 415, the UE establishes a new RCC connection on the 2G/3G network to complete a voice service. This does not affect a data service on the LTE network; therefore, the SGSN may not require that the RNC/BSC establish a dedicated transmission channel, and the SGSN may also not send an update message to an SGW, that is, the SGSN establishes a signaling bearer only at a BSC/RNC side but does not update a user plane to the SGW.

By using the method for implementing the voice service provided in the embodiment of the present invention, when a voice service does not need to be implemented, only the PS transceiver in the terminal needs to be turned on, but the CS transceiver stays in off state. Power consumption of the CS transceiver is reduced; therefore, entire power consumption of the terminal is greatly reduced.

In addition, in the embodiment of the present invention, through establishing a new RRC connection in a CS domain to complete a voice service, during this process, PS domain services, however, are not actually handed over to the 2G/3G network, but keeps staying on the LTE network. That is to say, in this process, establishing a 2G/3G RRC connection through implementing a fake PS handover. A data service continuously stays on the LTE network, and the solution in this embodiment does not involve handover of a data services between networks; therefore, this implementation mode may enable the UE to implement a CS voice service, meanwhile, keep good experience of high-speed data services.

In step 408, the ENB also may determine whether to initiate a real PS handover according to its load, for example, when ENB load is heavy, a real PS switchover may be initiated; therefore, the forward repositioning request sent by the MME to the GPRS does not carry a dual radio indication.

### Embodiment 4

A terminal required in an embodiment of the present invention is a dual radio (dual radio) terminal, that is, a CS transceiver and a PS transceiver are deployed in the terminal at the same time.

In this embodiment, an LTE network is taken as an example of a 4G network. The PS transceiver in the terminal (in this embodiment, it may be a 4G transceiver, such as an LTE transceiver) remains in on state and stays in working state, but the CS transceiver (in this embodiment, it may be a 2G/3G transceiver) stays in off state.

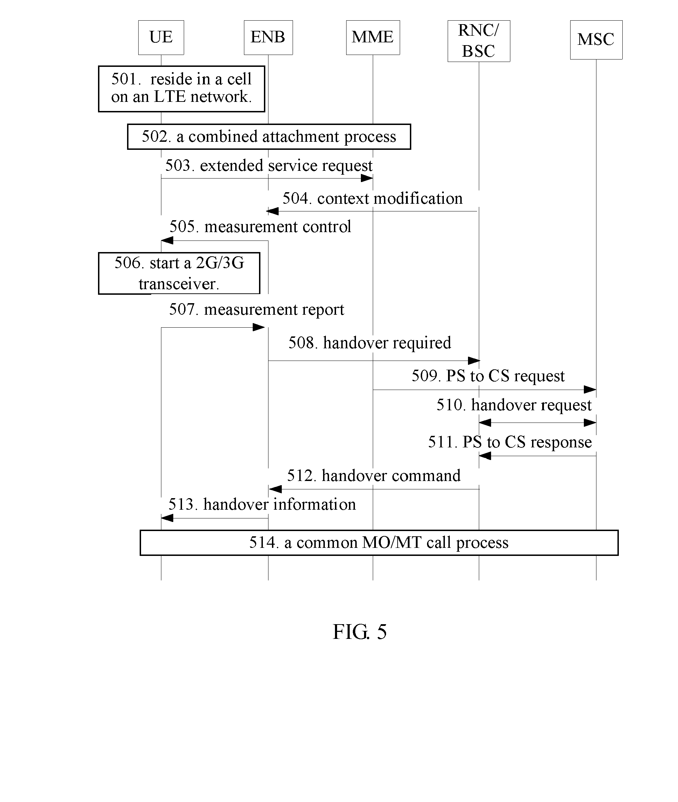

As shown in FIG. 5, the embodiment of the present invention provides a method for implementing a voice service. The method specifically includes the following steps:
501: A terminal UE resides in a cell on an LTE network.
502: By sending a combined attachment message to an MME on the LTE network, the terminal UE attaches to the LTE network and a 2G/3G network, where a 2G/3G transceiver of the terminal UE stays in off state.
503: When a voice service needs to be implemented, the UE sends an extended service request message (extended service request) to the MME on the LTE network, so that the MME instructs that a base station on the LTE network needs to trigger a CS fallback process.
504: The MME sends a context modification (context modification) message to an ENB, which is used to instruct the ENB to implement a CS fallback. The context modification message may also carry indication information indicating that the existing CS fallback process is a CSFB process based on a dual radio mode.

Before step 505, the MME needs to acquire whether the UE has dual radio capability first. Specifically, the UE may send radio capability (radio capability information) to the ENB, and add indication information of dual radio capability in the radio capability. Therefore, after obtaining the radio capability, the ENB acquires whether the UE has the dual radio capability; or
the UE notifies the MME whether the UE itself has dual radio capability, for example, the UE sends network capability (network capability information) to the MME, and adds dual-receiving and dual-sending capability indication information in the network capability. After acquiring dual radio capability of the UE, the MME notifies the ENB of the dual radio capability.
505: The ENB sends a measurement control (measurement control) message to the UE, which is used to instruct the UE to measure a cell on the 2G/3G network (hereinafter referred to as a 2G/3G cell). The measurement control message contains 2G/3G cell information or frequency group information. The 2G/3G cell information is used to indicate one or multiple 2G/3G cells that the terminal needs to measure. The frequency group information is used to indicate a 2G/3G cell that performs communications on one or multiple frequencies and that the terminal needs to measure. Meanwhile, the measurement control message may not carry a measurement gap (measurement gap), which is used to instruct the UE to turn on the 2G/3G transceiver to measure the 2G/3G cell.
506: After receiving the measurement control message, the UE starts the 2G/3G transceiver, and measures the 2G/3G network according to the measurement control message.

Through steps 503-506, a start process of the CS transceiver, namely, the 2G/3G transceiver, may be complete. After the 2G/3G transceiver is turned on, the UE implements a CS voice service in a 2G/3G cell according to the measurement result. For a specific implementation process, reference may be made to step 507-step 514.
507: The UE sends a measurement report to a base station ENB on the LTE network, and the measurement report carries the measurement result after the UE performs measurement on the 2G/3G network. The ENB selects a target cell according to the measurement result in the measurement report.

After that, the ENB triggers a handover process from a PS domain to a CS domain (PS-to-CS). For details, reference may be made to description in the following steps:
508: The ENB sends a handover required (handover required) message to the MME on the LTE network.
509: The MME sends a PS-to-CS handover message to an MSC (Mobile Switching Center, mobile switching center).

Where, the MME may indicate that a call does not need to be initiated in the message or contains an empty number in the message; in this way, the MSC does not initiate a call.
510: The MSC sends a handover request to a BSC/RNC, and the BSC/RNC returns a handover answer message.

In this step, after receiving the handover request sent by the MSC, the BSC/RNC reserves resources for a subsequent CS voice service.
511: The MSC returns a PS-to-CS handover answer message to the MME.
512: The MME sends a handover command (handover command) to the ENB.
513: The ENB sends handover information (handover information) to the UE.

In step 513, the handover information may be carried in a new RRC message. This does not cause a real LTE air interface connection interruption between the UE and ENB.
514: The UE is handed over to the 2G/3G network, gains access to a target cell on the 2G/3G network, and continues a call according to a common CS MO or MT process.

In step 510, the BSC/RNC has reserved resources for a CS voice service, a transmission channel has been established; therefore, when completing the common MO or MT process in step 514, RAB (Radio Access Bear, radio access bearer) assignment does not need to be performed again.

In the foregoing process to implement a voice service, if the UE initiates a calling service, the extended service request message in step 503 may also carry a called number. In step 509, the MME sends the called number to the MSC through the PS-to-CS handover message. After that, the MSC may start calling a terminal corresponding to the called number.

By using the method for implementing the voice service provided in the embodiment of the present invention, when a voice service does not need to be implemented, only the PS transceiver in the terminal needs to be turned on, but the CS transceiver stays in off state. Power consumption of the CS transceiver is reduced; therefore, entire power consumption of the terminal is greatly reduced.

In addition, in the embodiment of the present invention, through triggering a PS-to-CS handover process by the ENB and establishing an RRC connection and a transmission channel during the handover process to fully make preparations for a subsequent handover of the UE to the 2G/3G network, an access speed of the UE to access the 2G/3G may be increased. This enables the terminal to process CS voice service rapidly, meanwhile, to continue services on the LTE network and other high bandwidth radio networks.

In addition, the solution in this embodiment may also apply to a terminal in single radio (a maximum of one radio transceiver may stay in working state at any time) mode. If applied to a single radio terminal, a dual radio CSFB indication is not carried in step 504, a measurement gap is carried in step 505, and the measurement gap is used to perform measurement on the 2G/3G cell in step 506 and this step is optional. If step 506 is not implemented, step 507 is not implemented, and in step 513, a Mobility From EUTRAN command is used. However, a process that the UE turns on the 2G/3G transceiver may be implemented after step 513. At this time, the handover information in step 513 is sent to the UE through a Mobility From EUTRAN message, and the UE disconnects an LTE connection with the ENB after step 513.

The combined attachment in the embodiment of the present invention may enable a paging message on a 2G/3G CS network to be sent on a 4G network. The terminal does not receive the paging message in a 2G/3G cell, a short message is received and sent through the 4G network, and then the MME on the 4G network transfers the short message to the MSC on the 2G/3G CS network. When the MSC determines that the UE has gained access to the 2G/3G cell, it decides that the UE has not been in combined attached state. At this time, short message and voice services and so on are all sent to the UE through the 2G/3G network cell. A method for the MSC to decide that the UE has gained 2G/3G access is that the MSC receives the UE's message from the 2G/3G access network.

### Embodiment 5

Corresponding to the foregoing method embodiment, an embodiment of the present invention further provides a terminal for implementing the foregoing method.

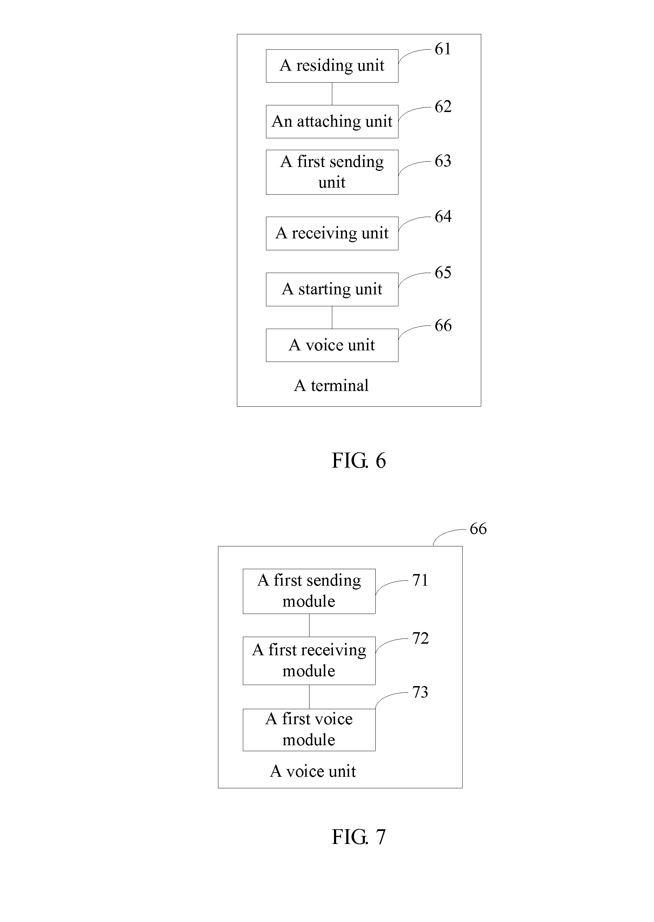

The terminal provided in the embodiment of the present invention is a dual radio (dual radio) terminal, where a CS transceiver and a PS transceiver are deployed at the same time. As shown in FIG. 6, the terminal includes:
a residing unit 61, configured to make the terminal reside in a cell on a 4G network;
an attaching unit 62, configured to send a combined attachment message or a combined location update message to a mobility management entity MME on the 4G network, so that the terminal performs combined attachment to a 2G/3G network and the 4G network, where the CS transceiver of the terminal is in off state;
a first sending unit 63, configured to send an extended service request message to the MME when a voice service needs to be implemented, so that the MME instructs that a base station on the 4G network needs to trigger a CS fallback;
a receiving unit 64, configured to receive a notification on measuring the 2G/3G network sent by the base station on the 4G network;
a starting unit 65, configured to turn on the CS transceiver and measure the 2G/3G network according to the notification; and
the voice unit 66, configured to implement the voice service on the 2G/3G network according to a measurement result.

In this embodiment, the voice unit 66 is specifically configured to reside to the 2G/3G network's cell according to the measurement result and implement a CS voice service; where
the voice unit 66, as shown in FIG. 7, may further include:
a first sending module 71, configured to send a measurement report to a base station on the 4G network;
a first receiving module 72, configured to receive system information of a target cell on the 2G/3G network sent by the base station on the 4G network, where the target cell is selected by the base station on the 4G network according to the measurement report; and
a voice module 73, configured to reside to the target cell on the 2G/3G network according to the system information and implement a CS voice service.

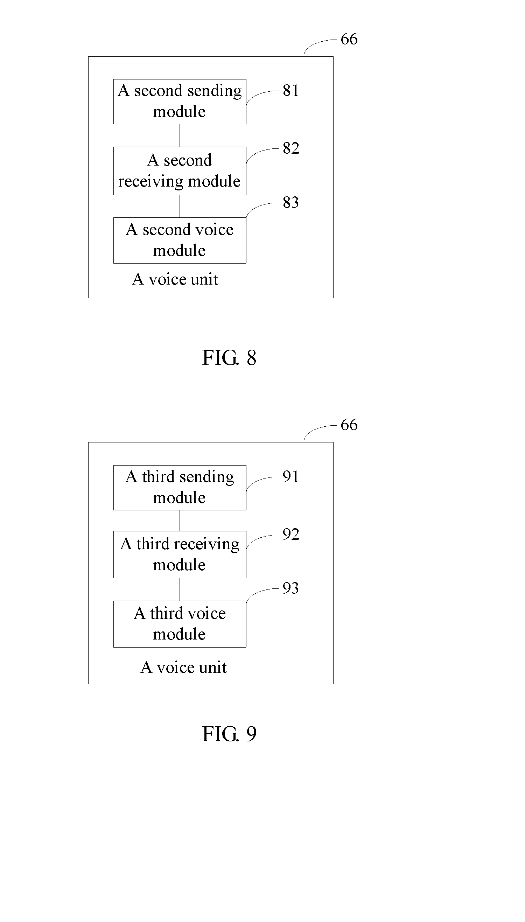

Or, in this embodiment, the voice unit as shown in FIG. 8, also includes:
a second sending module 81, configured to send a measurement report to the base station on the 4G network so that the base station on the 4G network selects a target cell on the 2G/3G network, and so that the 4G network triggers a dual radio mode handover; where, for a process that the 4G network performs a dual radio mode handover, reference may be made to step 408-step 415 in embodiment 3, which is not specifically described herein;
a second receiving module 82, configured to receive a handover response message sent by the base station on the 4G network; and
a second voice module 83, configured to access a target cell on a 2G/3G network and implement a CS voice service.

Or, in this embodiment, the voice unit as shown in FIG. 9, also includes:
a third sending module 91, configured to send a measurement report to the base station on the 4G network so that the base station on the 4G network selects a target cell on the 2G/3G network, and so that the 4G network triggers a PS-to-CS handover; where, for a process that the 4G network performs a PS-to-CS handover, reference may be made to step 508-step 514 in embodiment 4, which is not specifically described herein;
a third receiving module 92, configured to receive a handover response message sent by the base station on the 4G network; and
a third voice module 93, configured to access a target cell on a 2G/3G network and implement a CS voice service.

Besides, in this embodiment, the terminal may further include:
a second sending unit, configured to send radio capability information to the base station on the 4G network, where the radio capability information contains dual-receiving and dual-sending capability indication information of a current terminal; or
a third sending unit, configured to send network capability information to a core network of the 4G network, where the network capability information contains dual-receiving and dual-sending capability indication information of the terminal, so that the core network of the 4G network informs the base station on the 4G network of dual-receiving and dual-sending capability of the terminal.

For a process by using the terminal in the embodiment of the present invention, reference may be made to description in method Embodiment 2, Embodiment 3, and Embodiment 4, which will not be specifically described herein.

The terminal used for implementing the voice service in the embodiment of the present invention, when a voice service does not need to be implemented, retain a PS transceiver in a dual-mode terminal in working state and turn off a CS transceiver in the terminal. This may reduce power consumption of the terminal. Furthermore, the terminal has performed combined attachment to the 2G/3G network when a voice service needs to be implemented, so the terminal is capable of completing a service handover rapidly in order to complete the voice service in a CS domain.

### Embodiment 6

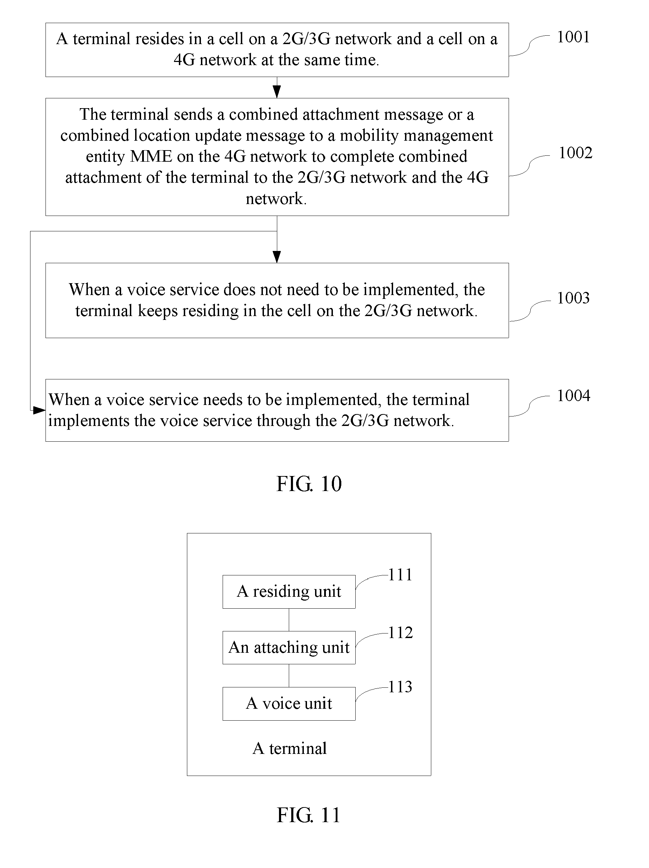

As shown in FIG. 10, an embodiment of the present invention provides another method for implementing a voice service. The method includes:
1001: A terminal resides in a cell on a 2G/3G network and a cell on a 4G network at the same time.
1002: The terminal sends a combined attachment message or a combined location update message to a mobility management entity MME on the 4G network to complete combined attachment of the terminal to the 2G/3G network and the 4G network.

The combined attachment of the terminal or combined location update to the 2G/3G network and the 4G network specifically refers to the combined attachment of the terminal or combined location update to a 2G/3G circuit switched CS network and a 4G network.
1003: When a voice service does not need to be implemented, the terminal keeps residing in the cell on the 2G/3G network.
1004: When a voice service needs to be implemented, the terminal implements the voice service through the 2G/3G network.

Corresponding to the foregoing method, this embodiment provides a terminal for implementing a voice service; the terminal is a dual-mode terminal. As shown in FIG. 11, the terminal includes:
a residing unit 111, configured to make the terminal reside in a cell on a 2G/3G network and in a cell on a 4G network at the same time;
an attaching unit 112, configured to send a combined attachment message or a combined location update message to a mobility management entity MME on the 4G network to complete combined attachment of the terminal to the 2G/3G network and the 4G network;
the residing unit 111, also configured to retain a residing state of the terminal in the cell on the 2G/3G network when a voice service does not need to be implemented; and
a voice unit 113, configured to implement the voice service through the 2G/3G network when the voice service needs to be implemented.

According to the method and terminal for implementing the voice service provided in this embodiment of the present invention, when a voice service does not need to be implemented, the PS transceiver in a dual-mode terminal keeps in working state and the CS transceiver in the dual-mode terminal is turned off or is made in static state. This may reduce power consumption of the terminal when there is no voice service. Furthermore, the terminal has performed combined attachment to the 2G/3G network; therefore, when a voice service needs to be implemented, the terminal is capable of completing service handover rapidly. With the solutions provided in the embodiments of the present invention, the power consumption of the terminal may be reduced to reach the purpose of saving energy; in addition, a process in which the 2G/3G network is accessed to implement a voice service may be fastened.

### Embodiment 7

A terminal required in an embodiment of the present invention is a dual radio (dual radio) terminal, that is, a CS transceiver (such as a 2G/3G transceiver) and a PS transceiver (such as a 4G transceiver) are deployed in the terminal at the same time.

In this embodiment, an LTE network is taken as an example of a 4G network. The CS transceiver and the PS transceiver in the terminal may be turned on at the same time. This may be called dual radio (dual radio) capability.

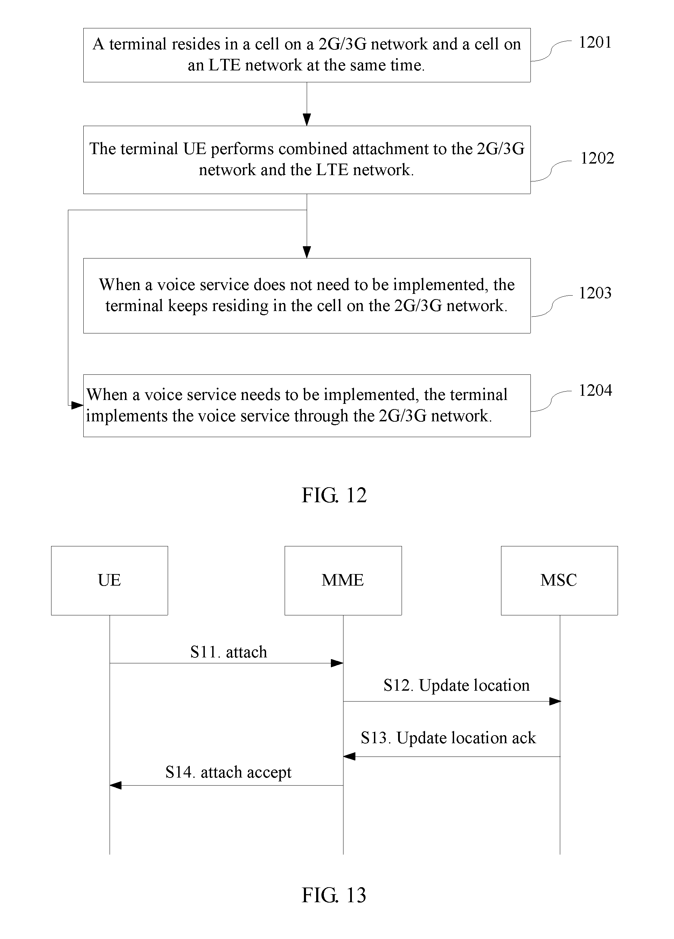

As shown in FIG. 12, the embodiment of the present invention provides a method for implementing a voice service. The method specifically includes the following steps:
1201: A terminal UE resides in a cell on a 2G/3G network and a cell on an LTE network at the same time.

After the terminal UE is powered on, the CS transceiver and the PS transceiver in the UE are turned on at the same time; at this time, the UE resides in a cell on the 2G/3G network and a cell on the LTE network at the same time.
1202: The terminal UE performs combined attachment to the 2G/3G network and the LTE network.

Specifically, before the UE performs combined attachment to the 2G/3G network and the LTE network, the terminal UE may read location area information LAI (Location Area Identity, location area identity) of the cell on the 2G/3G network where the UE resides. After that, the UE carries the LAI in a combined attachment message and sends it to an MME on the LTE network so that the MME selects a corresponding mobile switching center MSC on the 2G/3G network, and so that the MME sends the location update message to the MSC, so as to complete the combined attachment of the terminal to the 2G/3G network and the 4G network.

A process that the foregoing UE performs combined attachment to the 2G/3G network through the network node MME may as shown in FIG. 13, including:
S11: The UE in an LTE cell sends a combined attachment message to the MME. The combined attachment message carries the location area information LAI of the 2G/3G cell where the UE currently locates.

It should be noted that, two transceivers are turned on at the same time; therefore, the UE may reside in a cell in the 2G/3G network and the cell on the LTE network at the same time, and reads system information in order to obtain LAI of the 2G/3G network's cell where the UE currently resides; subsequently, as a result of an LAI change caused by 2G/3G cell selection or reselection, the UE always notifies the MME through a TAU (Tracking Area Update, tracking area update) and other messages (including the latest LAI); and then the MME notifies the MSC. All in all, it may keep the MME's obtained LAI as the latest LAI. This may ensure that the UE does not need to perform an LAU (Location Area Update, location area update) or a roaming retry (roaming retry) when the UE needs to perform a call in a 2G/3G CS domain; in this way, call establishing duration is reduced.
S12: The MME selects a corresponding MSC according to the LAI information, and sends an SGs establishment message or a location update message (Update location) to the MSC.
S13: The MSC returns an SGs establishment response message or a location update response message (Update location ack) to the MME.
S 14: The MME returns an attach accept (attach accept) message to the UE.

If the UE's location changes during a communications process, and at the same time, the 2G/3G cell where the UE locates also changes correspondingly; at this time, the terminal UE selects a cell on the 2G/3G network before performing combined attachment, and reads LAI of the selected cell. The location area information of a cell on the 2G/3G network currently read by the terminal may also be different from the location area information of a cell on the 2G/3G network where the UE registers upon power-on; therefore, the UE needs to attach to a new 2G/3G cell.

When the LAI of the selected cell is different from currently stored LAI of the terminal, the terminal UE carries the LAI of the selected cell in a combined location update message and sends it to the MME so that the MME selects a corresponding mobile switching center MSC on the 2G/3G network, and so that the MME sends the location update message to the MSC, so as to complete the combined attachment of the terminal to the 2G/3G network and the 4G network.

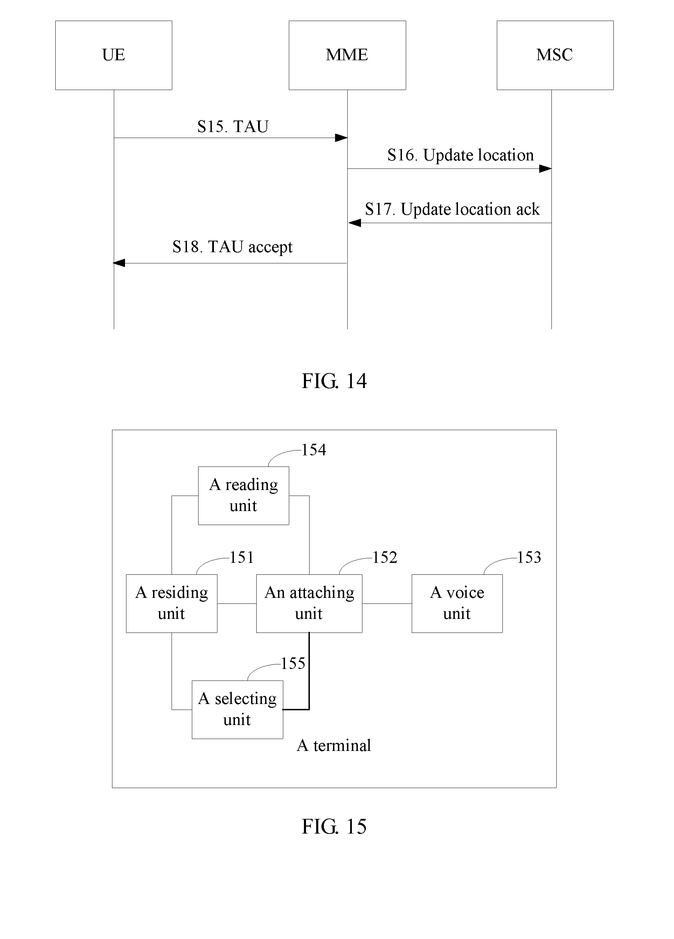

Where, for a 2G/3G cell reselection process, as show in FIG. 14, may include:
S15: The UE in an LTE cell sends a combined location update message TAU (Tracking Area Update, tracking area update) to the MME, where carrying the location area information LAI of the 2G/3G cell where the UE currently resides.
S16: The MME selects a corresponding MSC according to the LAI information, and sends an SGs establishment message or a location update message (Update location) to the MSC.
S17: The MSC returns an SGs establishment response message or a location update response message (Update location ack) to the MME.
S18: The MME returns a tracking area update accept (TAU accept) message to the UE.
1203: When a voice service does not need to be implemented, the terminal keeps residing in the cell on the 2G/3G network.

By using the PS transceiver in the terminal to intercept an LTE paging channel, a CS paging message may be obtained; at the same time, the CS transceiver in the terminal although has been turned on and resides in a cell on the 2G/3G network, it does not intercept a 2G/3G paging channel, or receive and send a short message. This state may be referred to as that the CS transceiver stays in static state.

In this way, when there is no voice service, only the PS transceiver stays in normal working state. This may greatly reduce power consumption when the PS transceiver and the CS transceiver are turned on.
1204: When a voice service needs to be implemented, the terminal implements the voice service through the 2G/3G network.

When initiating a voice call, the UE directly initiates a call on the 2G/3G network. The CS transceiver, namely the 2G/3G transceiver is always on, and has attached to a latest cell on the 2G/3G network through an LTE network; therefore, time that the UE needs to initiate the call is the same as that of a common CS call.

When a voice call arrives, the MSC sends a paging message to the MME, and then the MME notifies the UE, and the UE may directly return a paging response to the MSC on the 2G/3G network.

Because the UE implements a call or call response on the 2G/3G network, the MSC determines that the UE subsequently may implement services normally on the 2G/3G network, and all subsequent short messages and voice calls from or sent to the 2G/3G network are implemented through the 2G/3G network but are not transferred by the MME. That is to say, when the UE implements a voice service, the UE may directly use the 2G/3G transceiver in it to receive messages and voice streams sent from a CS domain.

In the foregoing process, if with a user's movement, the UE leaves the LTE network coverage area, the UE may directly send an LAU (Location Area Update, location area update) message to the MSC. All subsequent processes of short messages and paging and so on are implemented on the 2G/3G network.

If with the user's movement, the UE moves from an area not covered by the LTE network to an LTE network coverage area, the UE performs a process of combined attachment or combined location update. All subsequent processes of short messages and paging and so on are implemented on the LTE network; Or, after a 2G/3G network call is ended, the UE may actively send a combined location update to make the CS transceiver return to a static state.

Corresponding to the foregoing method embodiment, the embodiment of the present invention further provides a terminal. The terminal is a dual-mode terminal, and the CS transceiver and the PS transceiver are turned on at the same time; as shown in FIG. 15, the terminal includes:
a residing unit 151, configured to make the terminal reside in a cell on a 2G/3G network and in a cell on a 4G network at the same time;
an attaching unit 152, configured to send a combined attachment message or a combined location update message to a mobility management entity MME on the 4G network to complete combined attachment of the terminal to the 2G/3G network and the 4G network;
the residing unit 151, also configured to retain a residing state of the terminal in the cell on the 2G/3G network when a voice service does not need to be implemented; and
a voice unit 153, configured to implement a voice service through the 2G/3G network when a voice service needs to be implemented.

In the terminal provided in this embodiment, further including:
a reading unit 154, configured to read the location area information LAI of the cell on the 2G/3G where the terminal resides; and
at this time, the residing unit 152, specifically configured to carry the LAI in the combined attachment message and send it to the MME, so that the MME selects a corresponding mobile switching center MSC on the 2G/3G network, and so that the MME sends the location update message to the MSC, so as to complete the combined attachment of the terminal to the 2G/3G network and the 4G network.

Furthermore, the terminal also includes:
a reading unit 155, configured to make the terminal select a cell on the 2G/3G network and read LAI of the selected cell; and
the attaching unit 152, specifically configured to, when the LAI of the selected cell is different from currently stored LAI of the terminal, carry the LAI of the selected cell in a combined location update message and send it to the MME so that the MME selects a corresponding mobile switching center MSC on the 2G/3G network, and so that the MME sends the location update message to the MSC, so as to complete the combined attachment of the terminal to the 2G/3G network and the 4G network.

By using the solution for implementing a voice service provided in this embodiment of the present invention, two transceivers in the terminal are turned on at the same time, where the PS transceiver works normally but the CS transceiver stays in static state when a voice service does not need to be implemented. At this time, using the PS transceiver to complete receiving and sending of short messages and interception on CS paging may greatly reduce power consumption of the terminal; however, when a voice service needs to be implemented, activate the CS transceiver to ensure normal implementation of a voice service; meanwhile, it keeps LTE high-speed data services. Using the solution in the embodiment of the present invention, the power consumption of the terminal may be reduced to reach the purpose of saving energy while keeping high-speed data service experiences when a user uses a voice service.

Based on description in the foregoing embodiments, a person skilled in the art may clearly understand that the present invention may be implemented by using software in combination with a necessary hardware platform, and certainly, it may be implemented through hardware totally. Based on such understanding, the technical solutions in the present invention may be entirely or partially contributing to the prior art may be embodied in a form of a software product. The computer software product is stored in a storage medium, such as a ROM/RAM, magnetic disk, and compact disk and so on, and includes several instructions for instructing a computer device (which may be a personal computer, a server, a network device, and the like) to execute the methods provided in each embodiment of the present invention or described in certain parts of the embodiments.

The foregoing descriptions are merely specific embodiments of the present invention, but are not intended to limit the protection scope of the present invention. Any variation or replacement readily figured out by persons skilled in the art within the technical scope of the present invention shall fall within the protection scope of the present invention. Therefore, the protection scope of the present invention shall be subject to the protection scope of the claims.

## Claims

1. A method for implementing a voice service, comprising:
residing, by a terminal, in a cell on a 4G network;
sending, by the terminal, a combined attachment message or a combined location update message to a mobility management entity MME on the 4G network to attach to a 2G/3G network and the 4G network, wherein a CS transceiver of the terminal is in off state;
sending, by the terminal, an extended service request message to the MME when a voice service needs to be implemented, so that the MME instructs that a base station on the 4G network needs to trigger a CS fallback;
receiving, by the terminal, a notification on measuring the 2G/3G network sent by the base station on the 4G network;
turning on, by the terminal, the CS transceiver, and measuring the 2G/3G network according to the notification; and
implementing, by the terminal, the voice service on the 2G/3G network according to a measurement result.

2. The method for implementing a voice service according to claim 1, wherein the implementing, by the terminal, the voice service on the 2G/3G network according to a measurement result comprises:
residing, by the terminal, to a cell on the 2G/3G network according to the measurement result, and implementing, by the terminal, a CS voice service.

3. The method for implementing a voice service according to claim 2, wherein the residing, by the terminal, to a cell on the 2G/3G network according to the measurement result, and implementing, by the terminal, a CS voice service comprises:
sending, by the terminal, a measurement report to the base station on the 4G network;
receiving, by the terminal, system information of a target cell on the 2G/3G network sent by the base station on the 4G network, wherein the target cell is selected by the base station on the 4G network according to the measurement report; and
residing, by the terminal, to the target cell on the 2G/3G network according to the system information, and implementing the CS voice service.

4. The method for implementing a voice service according to claim 1, wherein the implementing, by the terminal, the voice service on the 2G/3G network according to a measurement result comprises:
sending, by the terminal, a measurement report to the base station on the 4G network;
selecting, by the base station on the 4G network, a target cell on the 2G/3G network according to the measurement report, and sending, by the base station on the 4G network, a handover required message to the mobility management entity MME on the 4G network, wherein the handover required message carries an indication for performing a dual transceiver mode handover;
sending, by the MME, a handover forwarding message to a serving GPRS support node SGSN on the 2G/3G network, wherein the handover forwarding message carries the indication for performing a dual transceiver mode handover;
sending, by the SGSN, a handover request message to a base station controller BSC or a radio network controller RNC, wherein the handover request message does not carry bearer information;
returning, by the BSC or the RNC, a handover answer message to the SGSN;
returning, by the SGSN, a handover forwarding response message to the MME;
sending, by the MME, a handover response message to the base station on the 4G network;
sending, by the base station on the 4G network, a handover response information to the terminal; and
accessing, by the terminal, the target cell on the 2G/3G network, and implementing, by the terminal, a CS voice service.

5. The method for implementing a voice service according to claim 1, wherein the implementing, by the terminal, the voice service on the 2G/3G network according to a measurement result comprises:
sending, by the terminal, a measurement report to the base station on the 4G network;
selecting, by the base station on the 4G network, a target cell on the 2G/3G network according to the measurement report, and sending, by the base station on the 4G network, a handover required message to the MME;
sending, by the MME, a PS-to-CS handover message to a mobile switching center MSC;
returning, by the MSC, a PS-to-CS handover response message to the MME;
sending, by the MME, a handover answer message to the base station on the 4G network;
sending, by the base station on the 4G network, a handover response information to the terminal; and
accessing, by the terminal, the target cell on the 2G/3G network, and implementing, by the terminal, a CS voice service.

6. The method for implementing a voice service according to claim 1, wherein the notification on measuring the 2G/3G network contains cell information or frequency group information of the 2G/3G network, and does not contain a measurement gap configuration.

7. The method for implementing a voice service according to claim 1, wherein, before the receiving, by the terminal, a notification on measuring the 2G/3G network sent by the base station on the 4G network, the method further comprises:
sending, by the terminal, radio capability information to the base station on the 4G network, wherein the radio capability information contains dual-receiving and dual-sending capability indication information of a current terminal; or
sending, by the terminal, network capability information to a core network of the 4G network, wherein the network capability information contains dual-receiving and dual-sending capability indication information of the terminal, so that the core network of the 4G network informs the base station on the 4G network of dual-receiving and dual-sending capability of the terminal.

8. A method for implementing a voice service, comprising:
residing, by a terminal, in a cell on a 2G/3G network and a cell on a 4G network at the same time;
sending, by the terminal, a combined attachment message or a combined location update message to a mobility management entity MME on the 4G network to complete combined attachment of the terminal to the 2G/3G network and the 4G network;
keeping residing, by the terminal, in the cell on the 2G/3G network when a voice service does not need to be implemented; and
implementing, by the terminal, the voice service through the 2G/3G network when the voice service needs to be implemented.

9. The method for implementing a voice service according to claim 8, wherein, after the residing, by the terminal, in the cell on the 2G/3G network, and before the combined attachment of the terminal to the 2G/3G network and the 4G network, the method further comprises: reading, by the terminal, location area information LAI of the cell on the 2G/3G network where the terminal resides; and
the sending, by the terminal, the combined attachment message to the MME on the 4G network to complete the combined attachment of the terminal to the 2G/3G network and the 4G network comprises:
carrying, by the terminal, the LAI in the combined attachment message and sending the message to the MME, so that the MME selects a corresponding mobile switching center MSC on the 2G/3G network, and so that the MME sends the location update message to the MSC, so as to complete the combined attachment of the terminal to the 2G/3G network and the 4G network.

10. The method for implementing a voice service according to claim 8, wherein, after the residing, by the terminal, in the cell on the 2G/3G network, and before combined update to the 2G/3G network and the 4G network, the method further comprises: selecting, by the terminal, a cell on the 2G/3G network, and reading, by the terminal, LAI of the selected cell; and
the sending, by the terminal, the combined location update message to the MME on the 4G network to complete the combined attachment of the terminal to the 2G/3G network and the 4G network comprises:
when the LAI of the selected cell is different from currently stored LAI of the terminal, carrying, by the terminal, the LAI of the selected cell in the combined location update message, and sending the message to the MME, so that the MME selects a corresponding mobile switching center MSC on the 2G/3G network, and so that the MME sends the location update message to the MSC, so as to complete the combined attachment of the terminal to the 2G/3G network and the 4G network.

11. A terminal, wherein the terminal is a dual-mode terminal, comprising:
a residing unit, configured to make the terminal reside in a cell on a 4G network;
an attaching unit, configured to send a combined attachment message or a combined location update message to a mobility management entity MME on the 4G network, so that the terminal performs combined attachment to a 2G/3G network and the 4G network, wherein a CS transceiver of the terminal is in off state;
a first sending unit, configured to send an extended service request message to the MME when a voice service needs to be implemented, so that the MME instructs that a base station on the 4G network needs to trigger a CS fallback;
a receiving unit, configured to receive a notification on measuring the 2G/3G network sent by the base station on the 4G network;
a starting unit, configured to turn on the CS transceiver and measure the 2G/3G network according to the notification; and
a voice unit, configured to implement the voice service on the 2G/3G network according to a measurement result.

12. The terminal according to claim 11, wherein the voice unit is configured to reside, according to the measurement result and implement a CS voice service, to a cell on the 2G/3G network.

13. The terminal according to claim 12, wherein the voice unit comprises:
a first sending module, configured to send a measurement report to the base station on the 4G network;
a first receiving module, configured to receive system information of a target cell on the 2G/3G network sent by the base station on the 4G network, wherein the target cell is selected by the base station on the 4G network according to the measurement report; and
a first voice module, configured to reside to the target cell on the 2G/3G network according to the system information and implement the CS voice service.

14. The terminal according to claim 11, wherein the voice unit comprises:
a second sending module, configured to send a measurement report to the base station on the 4G network, so that the base station on the 4G network selects a target cell on the 2G/3G network, and so that the 4G network triggers a dual radio mode handover;
a second receiving module, configured to receive a handover response message sent by the base station on the 4G network; and
a second voice module, configured to access the target cell on the 2G/3G network and implement a CS voice service.

15. The terminal according to claim 11, wherein the voice unit comprises:
a third sending module, configured to send a measurement report to the base station on the 4G network, so that the base station on the 4G network selects a target cell on the 2G/3G network, and so that the 4G network triggers a dual radio mode handover;
a third receiving module, configured to receive a handover response message sent by the base station on the 4G network; and
a third voice module, configured to access the target cell on the 2G/3G network and implement a CS voice service.

16. The terminal according to claim 11, further comprising:
a second sending unit, configured to send radio capability information to the base station on the 4G network, wherein the radio capability information contains dual-receiving and dual-sending capability indication information of a current terminal; or
a third sending unit, configured to send network capability information to a core network of the 4G network, wherein the network capability information contains dual-receiving and dual-sending capability indication information of the terminal, so that the core network of the 4G network informs the base station on the 4G network of dual-receiving and dual-sending capability of the terminal.

17. A terminal, comprising:
a residing unit, configured to make the terminal reside in a cell on a 2G/3G network and in a cell on a 4G network at the same time;
an attaching unit, configured to send a combined attachment message or a combined location update message to a mobility management entity MME on the 4G network to complete combined attachment of the terminal to the 2G/3G network and the 4G network; wherein
the residing unit is further configured to retain a residing state of the terminal in the cell on the 2G/3G network when a voice service does not need to be implemented; and
a voice unit, configured to implement the voice service through the 2G/3G network when the voice service needs to be implemented.

18. The terminal according to claim 17, further comprising:
a reading unit, configured to read location area information LAI of the cell on the 2G/3G where the terminal resides; wherein
the attaching unit is specifically configured to carry the LAI in the combined attachment message and send the message to the MME, so that the MME selects a corresponding mobile switching center MSC on the 2G/3G network, and so that the MME sends the location update message to the MSC, so as to complete the combined attachment of the terminal to the 2G/3G network and the 4G network.

19. The terminal according to claim 17, further comprising:
a selecting unit, configured to make the terminal select a cell on the 2G/3G network and read LAI of the selected cell; wherein
the attaching unit is specifically configured to, when the LAI of the selected cell is different from currently stored LAI of the terminal, carry the LAI of the selected cell in the combined location update message and send the message to the MME, so that the MME selects a corresponding mobile switching center MSC on the 2G/3G network, and so that the MME sends the location update message to the MSC, so as to complete the combined attachment of the terminal to the 2G/3G network and the 4G network.
